# EUROPÄISCHE PATENTANMELDUNG

(11) **EP 1 593 883 A1**
(43) Veröffentlichungstag der Anmeldung: **09.11.2005**
(21) Anmeldenummer: 05009425.9
(22) Anmeldetag: 29.04.2005
(51) Int. Cl.: F16J 9/20

(54) **Kolben mit Kolbenringnuten**

(30) Priorität: 03.05.2004 DE 102004021662
(71) Anmelder: MAN B&W Diesel AG, 86224 Augsburg (DE)
(72) Erfinder: Grünsteudel, Ludwig, 86391 Leitershofen (DE); Rieck, Kai, 86368 Gersthofen (DE)
(74) Vertreter: Zacharias, Frank L.

(57) **Zusammenfassung**

Um ausgehend von einem Kolben mit Kolbenringnuten zur Aufnahme von Kolbenring (1,10) mit unsymmetrischen Querschnittskonturen einen Kolben mit Kolbenringnuten zu schaffen, deren Schadstoffvolumen bei Verwendung unsymmetrischer Kolbenringe verringert ist, ist vorgesehen, dass die Querschnittskontur der Kolbenringnut der Querschnittskontur des Kolbenringes (1,10) unter Freilassung eines Gasspaltes angepasst ist.

## Beschreibung

Die Erfindung betrifft einen Kolben mit Kolbenringnuten zur Aufnahme von Kolbenringen mit unsymmetrischen Querschnittskonturen.

Kolbenringe mit unsymmetrischen Querschnittskonturen bieten den Vorteil eines beschleunigten Abdichtvermögens durch Vertwistung, die durch die schiefe Biegung hervorgerufen wird. Es lassen sich dadurch kürzere Einlaufzeiten erzielen. Außerdem kompensieren diese Kolbenringe eine thermische Verformung im Betrieb. Nachteilig beim Einsatz derartiger Kolbenringe ist jedoch ein großes Schadraumvolumen in der Kolbenringnut. Dies hat negativen Auswirkungen auf die Gasdynamik im Ringpaket und auf das Laufverhalten der Kolbenringe.

Der Erindung liegt die Aufgabe zugrunde, einen Kolben mit Kolbenringnuten zu schaffen, deren Schadstoffvolumen bei Verwendung unsymmetrischer Kolbenringe verringert ist.

Erfindungsgemäß wird dies dadurch erreicht, dass die Querschnittskontur der Kolbenringnut der Querschnittskontur des Kolbenringes unter Freilassen eines Gasspaltes angepasst ist. Hierdurch lässt sich das Gasvolumen zwischen dem Kolbenring und der Kolbenringnut verringern.

Nach einer Ausgestaltung der Erfindung weist bei Verwendung eines Kolbenringes mit einer rückseitig durch eine Schrägfläche begrenzten Innenfase die Kolbenringnut einen Füllvorsprung auf, der durch eine parallele, mit Abstand angeordnete Schrägfläche begrenzt ist.

Gemäß einer anderen Ausgestaltung der Erfindung weist bei Verwendung eines Kolbenringes mit einer rückseitigen, durch zwei Begrenzungsflächen gebildeten Ausnehmung die Kolbenringnut einen Füllvorsprung auf, der durch zu den Begrenzungsflächen der Ausnehmung parallele, mit Abstand angeordnete Flächen begrenzt ist.

Weitere Merkmale und Vorteile ergeben sich aus den zusätzlichen Unteransprüchen und der Beschreibung zweier Ausführungsbeispiele der Erfindung anhand der Zeichnung. Auf dieser zeigt jeweils in einem die Querschnittskonturen herausstellenden senkrechten Schnitt
- Figur 1: die Anordnung für einen Innenphasen-Kolbenring und
- Figur 2: die Anordnung für einen L-Ring.

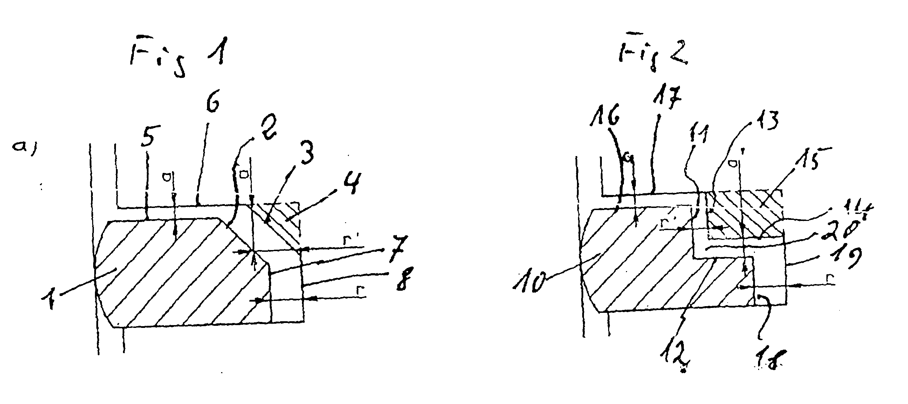

Der Kolbenring 1 gemäß Figur 1 weist am oberen rückseitigen Ende eine durch eine Schrägfläche 2 begrenzte Innenfase auf. Die Kolbenringnut weist eine zur Schrägfläche 2 mit Abstand angeordnete Schrägfläche 3 auf, die im Nutengrund einen Füllvorsprung 4 begrenzt. Dabei verläuft die Kolbenring-Oberfläche 5 in einem Abstand a zur Kolbenringnut-Oberfläche 6. Der hierdurch gebildete Gasspalt setzt sich zwischen den beiden Schrägflächen 2, 3, die voneinander einen Abstand a haben, fort. Dieser Gasspalt endet zwischen der Kolbenring-Rückfläche 7 und der Kolbenringnut-Rückfläche 8. Dabei ergibt sich zwischen Schrägflächen 2 und 3 ein waagerechter Abstand r und zwischen den Rückflächen 7 und 8 ein waagerechter Abstand r. Durch die Wahl der Abstände a, a', r, r' kann das Gasvolumen im Spalt zwischen dem Kolbenring 1 und der Kolbenringnut festgelegt werden.

Das Ausführungsbeispiel gemäß Figur 2 geht von einem Kolbenring 10 aus der eine durch zwei Begrenzungsflächen 11, 12 gebildete L-förmige Ausnehmung 20 aufweist. Die Begrenzungsflächen 11, 12 stehen hier senkrecht aufeinander. Es ist jedoch auch möglich, das die Begrenzungsflächen unter einem größeren Winkel zueinander verlaufen. Parallel und mit Abstand zur Begrenzungsfläche 11, verläuft eine Fläche 13. Diese bildet zusammen mit einer Fläche 14, die parallel zur Begrenzungsfläche 10 verläuft, einen Füllvorsprung 15.

Der Kolbenring 10 weist eine Kolbenring-Oberfläche 16 auf die im Abstand a parallel zur Kolbenringnut-Oberfläche 17 verläuft. Der hierdurch gebildete Gasspalt setzt sich zwischen der Begrenzungsfläche 11 und der Fläche 13 des Füllvorsprunges 15 fort. Diese beiden Flächen sind in einem waagerechten Abstand r' zueinander angeordnet. Weiterhin ist der Gasspalt durch die Begrenzungsfläche 12 und die Fläche 14, zwischen denen der Abstand a' beträgt, gebildet. Der Gasspalt läuft dann zwischen der Rückfläche 18 des Kolbenrings 10 und der hierzu parallelen Rückfläche 19 der Kolbenringnut aus. Diese beiden Flächen sind im Abstand r voneinander angeordnet. Auch in diesem Fall kann durch die Wahl der Abstände a, a', r, r' das Gasvolumen im Gasspalt zwischen dem Kolbenring 10 und der Kolbenringnut gewählt werden.

Zur Grundauslegung werden zweckmäßig die Abstände a und a' gleich ausgebildet. Das gleiche gilt für die Abstände r und r'. Hiervon kann jedoch, wie auch die Ausführungsbeispiele zeigen, abgewichen werden. In jedem Fall ergeben sich Querschnitt-Konturen für den Kolbenring und die Kolbenringnut, die aneinander angepasst sind.

Mit besonderem Vorteil lässt sich die Erfindung bei Verwendung von unsymmetrischen Kompressions-Kolbenringen anwenden.

## Patentansprüche

1. Kolben mit Kolbenringnuten zur Aufnahme von Kolbenringen mit unsymmetrischen Querschnittskonturen, **dadurch gekennzeichnet, dass** die Querschnittskontur der Kolbenringnut der Querschnittskontur des Kolbenringes (1, 10) unter Freilassen eines Gasspaltes angepasst ist.

2. Kolben nach Anspruch 1, **dadurch gekennzeichnet, dass** bei Verwendung eines Kolbenringes (1) mit einer rückseitig durch eine Schrägfläche (2) begrenzten Innenfase die Kolbenringnut einen Füllvorsprung (4) aufweist, der durch eine parallele, mit Abstand angeordnete Schrägfläche (3) begrenzt ist.

3. Kolben nach Anspruch 1, **dadurch gekennzeichnet, dass** bei Verwendung eines Kolbenringes (10) mit einer rückseitigen, durch zwei Begrenzungsflächen (11, 12) gebildeten Ausnehmung die Kolbenringnut einen Füllvorsprung (15) aufweist, der durch zu den Begrenzungsflächen der Ausnehmung parallele, mit Abstand hierzu angeordnete Flächen (13, 14) begrenzt ist.

4. Kolben nach Anspruch 1 oder 2, **dadurch gekennzeichnet, dass** der senkrechte Abstand (a) der Kolbenring-Oberfläche (5) von der Kolbenringnut-Oberfläche (6) etwa gleich dem senkrechten Abstand (a') der Schrägflächen (2, 3) voneinander ist.

5. Kolben nach Anspruch 1, 2 oder 4, **dadurch gekennzeichnet, dass** der waagerechte Abstand (r') der Schrägflächen (2, 3) voneinander etwa gleich dem Abstand (r') der Rückfläche (7) des Kolbenringes von der Rückfläche (8) der Kolbenringnut gewählt ist.

6. Kolben nach Anspruch 1 oder 3, **dadurch gekennzeichnet, dass** der senkrechte Abstand (a') der Kolbenring-Oberfläche (16) von der Oberfläche (17) der Kolbenringnut etwa gleich dem senkrechten Abstand (a') der unteren Begrenzungsfläche (12) der Ausnehmung von der unteren Fläche (14) des Füllvorsprunges (15) gewählt ist.

7. Kolben nach Anspruch 1, 3 oder 6, **dadurch gekennzeichnet, dass** der waagerechte Abstand (r') der oberen Begrenzungsfläche (11) von der hierzu parallelen Fläche (13) des Füllvorsprunges (15) etwa gleich dem Abstand ® der Rückfläche (18) des Kolbenringes (10) von der Rückfläche (19) der Kolbenringnut gewählt ist.
